(19) Europäisches Patentamt
European Patent Office
Office européen des brevets

(11) Publication number : **0 421 223 B1**

# (12) EUROPEAN PATENT SPECIFICATION

(45) Date of publication of patent specification : **14.04.93 Bulletin 93/15**

(51) Int. Cl.$^5$ : **C02F 3/12,** C02F 3/34

(21) Application number : **90118267.5**

(22) Date of filing : **23.09.90**

## (54) A process and plant for disposal of organic effluents.

(30) Priority : **04.10.89 IT 2191989**

(43) Date of publication of application : **10.04.91 Bulletin 91/15**

(45) Publication of the grant of the patent : **14.04.93 Bulletin 93/15**

(84) Designated Contracting States : **ES FR GR IT**

(56) References cited :
**DE-A- 2 640 156**
**FR-A- 2 607 490**

(56) References cited :
**CHEMICAL ABSTRACTS, vol. 96, no. 22, 31 May 1982 Columbus, Ohio, USA Alfani et al.: "Experimental study on continuous digestion of cellulose waste in a combined reactor system" page 369; ref. no. 186647B**
**CHEMICAL ABSTRACTS, vol. 111, no. 6, 07 August 1989 Columbus, Ohio, USA Ranalli, Alfonso: "Research on the use of ferments in biological treatment of waste water from oil presses. Orientation tests with the SNKD complex." page 342; ref. no. 44697X**

(73) Proprietor : **Poglio, Achille**
**Via Passo Rolle 55**
**I-20134 Milan (IT)**

(72) Inventor : **Poglio, Achille**
**Via Passo Rolle 55**
**I-20134 Milan (IT)**

(74) Representative : **Coloberti, Luigi**
**Via E. de Amicis No. 25**
**I-20123 Milano (IT)**

**EP 0 421 223 B1**

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to a process for disposal of organic effluents and black liquors of olive oil mills.

With organic effluent is here meant a waste aqueous mixture of organic substances as a suspension, emulsion or solution, such as sewage waters or those deriving from stock-farms, dairy product factories, canneries, food, wine and fish manufacturing industries, pharmaceutical industries, olive oil mills, sugar-refineries, abattoirs, distilleries and similar plants.

All effluents of this kind are facing great disposal problems. In fact organic effluents, and especially animal effluents, induce pathogenic proliferations and also are extremely bad smelling even in reduced quantities. A quick disposal of such effluents is therefore necessary. More particularly, black liquors or olive oil-mill effluents disposal is quite difficult in view of their composition that comprises oleoeuropein, oleic acid, proteines, aminoacids, phenols and polyphenols (namely catecholmelaninic pigment, which is per se about 40% of the effluent dry residue), cellulose, starch and polysaccarides in general.

In nature effluent organic substances are metabolized by microorganisms, insects, larvae and earthworms present in the soil, to give a mixture of complex aromatic molecules known as humic or fulvic compounds or, more generally, as humic acids or humic extracts. A first solution to the disposal problem of organic effluents provides their dispersion onto the ground and their subsequent metabolization by the above cited natural organisms. Unfortunately, this solution has the drawback of dispersing in the environment substances that are foul smelling and possibly pathogenic and of requiring wide surfaces onto which spray the effluents in view of the reduced maximum ratio effluent dispersed quantity to sprayed area. In fact higher ratios result in anomalous fermentations of the dispersed organic substances, which damage existing grass and tree crops.

All remaining disposal processes provide to separate the organic substances from dilution water in order to treat them separately, e.g. by evaporating said water.

It will be evident, when considering that the dry percent of the effluents is usually within the range from 5,000 to 120,000 p.p.m., that this solution is quite expensive and unreasonable.

Chemical Abstracts Vol.96 N°23 May 1982 and Vol.111 N°6 of August 1989, FR-A-2607490 and DE-A-2640156 are cited as tecknological background ; none of the cited documents disclose or suggest a process according to present invention.

An object of the invention is therefore to provide a process for disposing of organic effluents and black liquors from olive oil production in a simple, unexpensive and reliable way through an accelerated metabolization of the organic substances and their transformation into humic acids.

A further object of the invention is to solve the problem of treating highly polluted waste water particularly from olive oil mills so as to convert it by simple means to an environmentally accettable product.

Said objects are obtained through the invention, providing a process for the disposal of organic effluents and black waters according to claim 1.

The process according to the invention enables the quick disposal of organic effluents and, their complete deodorizing and their unexpensive conversion to raw materials required in agriculture.

The invention will be disclosed by way of non limiting examples referring to the enclosed drawing, showing a preferred plant to carry out a process according to the invention.

The process of the invention provides to have the effluents undergo two distinct oxigenating steps, with stirring, in acidic and neutral conditions, respectively, followed by a third oxigenating step in presence of at least one enzymic substance that regulates the fermentation, each step being effected for a preselected time.

Enzymic substances of the kind to be used in the invention are known in the art and are used, usually as a mixture, for preparing compost from vegetable waste or for deodorizing chemical water closets. Such mixtures are commercially available under the trade name POLYENZIM MISCELA ENZIMATICA (by I.F.B. srl - Milano).

It was surprisingly found that the use of said substance(s) at the end of the above cited first and second oxigenations enables to convert organic effluents of any kind to a mixture of humic acids, or humic extracts, of great value in agriculture as liquid fertilizer. Said aqueous mixture, that can be dispersed directly on the soil and does not involve any danger of overdosing, is an object of the present invention.

The following general formula of the humic acids structure is given to an illustrative purpose.

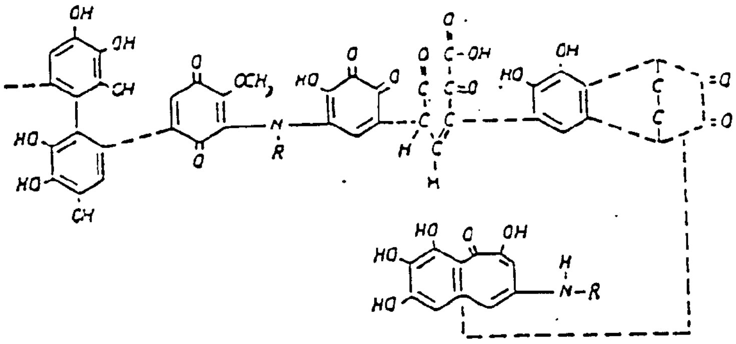

The cited oxigenating steps in acidic and neutral conditions for a minimum preselected time are two critical steps of the invention process, because they catalize the fermentation reactions that bring to the degradation of the organic molecules during acidic oxigenation and to the building up of humic acids during oxigenation in neutral conditions. The synthesis of humic acids is then accelerated and substantially completed during the final step of oxigenation in the presence of said enzymic substances.

The pH value of the effluent is detected before each step and is adjusted, if necessary, to the preferred value for that step. Any suitable means known in the art may be used to acidify or basify the effluent, however, in the preferred process, the effluent pH is adjusted by addition of liquid ammonium humate in acidifying or basifying phase according to the oxigenating step requirements. In fact it was found that liquid ammonium humate from leonardite or earthworm humus is a catalyst for the required fermentation reactions.

This product is usually added in a quantity within the range from 0.5 to 8.0 per thousand by weight of the effluent, according to the dry percent of the effluent. Usual quantities to be added are from 0.5 to 5.0 per thousand of humate in the first oxigenating step and from 0.5 to 7.5 per thousand in the second oxigenating step. More generally the humate quantities to be added to the aqueous effluent are 0.5 per thousand or from 0.5 to 0.75 per thousand of humate by weight for each 2 percent by weight of dry, the percentages (and per thousands) being calculated on the total effluent weight, according to the following tables.

Table 1

| Dry (percent) | Ammonium humate in acidifying phase (per thousand) |
|---|---|
| 0.05-2.0 | 0.5 |
| 2.01-4.0 | 1.0 |
| 4.01-6.0 | 1.5 |
| 6.01-8.0 | 2.0 |
| 8.01-10.0 | 2.5 |

and so on for every 2% increase of the dry in the effluent or fraction thereof.

Table 2

| Dry (percent) | ammonium humate in basifying phase (per thousand) |
|---|---|
| 0.05-2.0 | 0.5-0.75 |
| 2.01-4.0 | 1.0-1.50 |
| 4.01-6.0 | 1.5-2.25 |
| 6.01-8.0 | 2.0-3.0 |
| 8.01-10.0 | 2.5-3.75 |

and so on for every 2% increase of the dry in the effluent or fraction thereof.

These additions should also take into account the pH value in each oxigenating step: if, e.g., at the end of the second oxigenating step the resulting pH value is too low, said value will be adjusted to substantial neutrality (pH 6.8-7.2) by addition of ammonium humate in basifying phase.

The oxigenation is carried out while stirring the effluent and insufflating ambient air with means known in the art. The air volume to be insufflated is of about 10-20 liters for every effluent liter, in total, during the first two oxigenating steps, and of about the same air quantity for the last oxigenating and humate forming step.

As previously said, the enzymic substance to be used in the third phase can be consisted of one enzyme only, but in the preferred embodiment of the invention an enzymic mixture will be used, comprising a plurality of enzymes suitable to degrade the organic molecules of each particular effluent. A preferred composition of this kind, suitable for treatment of most effluents, is comprising the following enzymes : amylase, cellulase, lactase, lipase, pancrease, protease, betalactamase, and invertase. Said enzymes are usually admixed with organic or inorganic supports such as soybean lecithin, cereal flour, algae or yeast flour, dolomites, bentonite or calcareous magnesium containing fillers. Obviously the enzymes and the enzymic mixture composition will vary according to the specific type of effluent to be treated.

The quantity of enzymic substance added to the effluent at the third step of the process is usually within the range from 0.04 to 0.4 per thousand by weight of the whole effluent. More specifically 0.04 per thousand by weight of enzymic substance is added to the effluent for every 2 percent (or fraction thereof) of dry material of said effluent, according to following table 3.

Table 3

| Dry (percent) | Enzymic substance (per thousand) |
|---|---|
| 0.05-2.0 | 0.04 |
| 2.01-4.0 | 0.08 |
| 4.01-6.0 | 0.12 |
| 6.01-8.0 | 0.16 |
| 8.01-10.0 | 0.20 |

and so on for every 2% increase of the dry in the effluent or fraction thereof.

The processing times are also varying according to the effluent composition. For nearly all effluents both first and second oxigenating steps are effected for about six hours each and the last enzymic step lasts about twelve hours with a total processing time of about 24 hours. In other cases, namely when treating olive oil mills effluents or black liquors, because of the effluent composition first and second oxigenating steps will last about 12 hours, and last enzymic step will last about 24 hours, with a global processing time of about 48 hours.

The first and second oxigenating step does not require any temperature control, while in carrying out the third step a process temperature within 16 and 32 °C degrees is preferred; however, temperatures even greatly above or below the cited range only result in accelerating or delaying the humifying reactions and do not really affect the conversion yield.

An example of a general composition of a humic extract is hereinbelow cited:

Table 4

| | |
|---|---|
| Dry material | 2-10% by weight |
| Total organic substance in the dry | 60-65% by weight |
| Humified organic substance in the total organic substance | 65-70% by weight |
| Organic nitrogen in the dry | 1.0-1.5% by weight |
| Carbonium in the dry | 30-45% by weight |
| C/N | 30 |
| pH | 6.0-7.5 |

The accompanying figure is a schematical drawing of a preferred plant for disposal of organic effluents

according to the process of the invention.

This plant comprises a plurality of tanks or similar containers, provided with agitation means and air or analogous oxigenating gas supply means. The aeration tanks are interconnected by means to feed the effluents according to each process step. In the preferred plant disclosed in the accompanying drawing three tanks 1-3 are provided for the cited three catalytic and enzymic oxigenating (aerating) steps, plus a further catch well 4 collecting the effluents and a final stocking tank 5 for the humified and deodorized effluents. Each tank 1-3 is provided with a stirrer 6 and with ambient air or oxigenating gases feeding means 7; tanks 1 and 2 are provided with ducts and pumping means 8 and 9 to feed the effluent from said tanks to tank 3, which is provided with a similar pumping means 12 for feeding the deodorized effluent to stocking tank 5. Above tanks 1 and 2 are provided reservoirs 10 and 11 respectively, for liquid humate or similar acidifying or basifying substances useful to adjust the effluent pH, and relevant ducts to subsequently feed said pH adjusting substances to tanks 1 and 2 alternatively. The stocking tank, or lagoon, 5 is further provided with agitating means 13 to avoid the solids in the final product settling within said lagoon.

When operating the above plant, the effluents are brought in a known way from said collecting well 4 to a first tank, e.g. tank 1. When tank 1 is full the effluent is fed to second tank 2, the pH of tank 1 effluent is then detected and adjusted , if required, by adding an acidifying substance e.g. acidic ammonium humate according to above cited table 1. After a process time of 6 to 12 hours according to the effluent characteristics, during which the required oxigenation is carried out, the effluent pH is again detected and adjusted to neutrality by addition of a basifying substance eg. ammonium humate from reservoir 11 according to above cited table 2, while oxigenating and stirring during the whole second step.

Then, after checking the effluent pH and adjusting it if necessary, the latter is fed by means of ducts 8 and pumps 9 to tank 3, where the above disclosed third step, i.e. oxigenating in the presence of an enzymic substance fed from reservoir 14 according to table 3 teachings, is carried out at a preferred temperature within 16 to 32°C. The process time of this third step is usually within 12 to 24 hours according to the effluent characteristics.

The treated effluent is then transferred by the pumping means 12 to the stocking lagoon 5 before its use in agriculture.

## Claims

1. A process for the disposal of organic effluents and black liquors and olive oil mills, characterized by comprising the following steps: a first oxigenation at an acidic pH value below 6,8, Feeding at least 5 litres of air per effluent liter; a second oxigenation of the cited effluent at a substantially neutral condition with pH value within 6,8 and 7,2 feeding at least 5 litres of air per effluent liter, and a third oxigenation in presence of at least one enzymic substance feeding at least 5 litres of air per effluent liter under stirring condition to obtain a substantial humification of said effluents.

2. A process according to claim 1, wherein said pH value of the effluents is detected and adjusted before each oxigenating step, to an acidic value for said first step and to a substantially neutral value for said second and third steps.

3. A process according to claim 2, wherein said effluent pH value is adjusted by addition of acidifying or basifying liquid ammonium humate.

4. A process according to claim 3, wherein a quantity of said ammonium humate within the range from 0.5 to 0.75 per thousand by effluent weight for every 2.0%, or fraction thereof, of effluent dry material is added.

5. A process according to claim 1, wherein said enzymic substance is consisted of at least one enzyme.

6. A process according to claim 5, wherein said enzymic substance is a mixture of enzymes selected from: amylase, cellulase, lactase, lipase, pancrease, protease, betalactamase, invertase.

7. A process according claim 1, 5 or 6, wherein said enzymic substance comprises at least one supporting filler selected from : soybean lecithin, cereal flour, algae or yeast flours, dolomites, bentonite, lavic materials, and calcareous magnesium containing fillers.

8. A process according to claim 1, wherein about 0.04 per thousand by effluent weight of said enzymic substance is added for every 2.0%, or fraction thereof, of effluent dry material.

9. A process according to any previuos claim, characterized in feeding from 5 to 10 liters of air for every effluent liter during said first and second oxigenating steps, with stirring, and in feeding from 10 to 20 liters of air for every effluent liter, with stirring, during said last enzymic oxigenating step.

10. A process according to any previous claim, wherein each step is effected for a time length within the range from 5 to 30 hours.

11. A process according to claim 10, wherein said effluents are coming from olive oil processing industries, characterized in carrying out said first and second oxigenating steps for a total time length of 24 hours and said third step for 24 hours.

12. A process according to claim 1, wherein said third oxigenation step is carried out with heating of said organic effluents.

## Patentansprüche

1. Ein Verfahren für die Beseitigung von organischem Abwasser und Schwarzbeize vom Olivenölmühlen, gekennzeichnet durch den Umstand, daß es folgende Schritte umfaßt: eine erste Anreicherung mit Sauerstoff bis zu einem sauren pH-Wert von unter 6,8, unter Zufuhr von mindestens fünf Litern Luft je Liter Abwasser; eine zweite Anreicherung des genannten Abwassers mit Sauerstoff bis zu einem im wesentlichen neutralen Zustand mit einem pH-Wert zwischen 6,8 und 7,2, unter Zufuhr von mindestens fünf Litern Luft je Liter Abwasser; und eine dritte Anreicherung mit Sauerstoff bei Vorhandensein mindestens einer enzymischen Substanz, unter Zufuhr von mindestens fünf Litern Luft je Liter Abwasser bei Verrühren, um eine wesentliche Humifizierung des besagten Abwassers zu erreichen.

2. Ein Verfahren wie unter Patentanspruch 1 beschrieben, bei welchem der besagte pH-Wert des Abwassers vor jedem Sauerstoffanreicherungs-Schritt festgestellt und korrigiert wird, und zwar auf einen sauren Wert vor dem besagten ersten Schritt sowie auf einen im wesentlichen neutralen Wert für den besagten zweiten und dritten Schritt.

3. Ein Verfahren wie unter Patentanspruch 2 beschrieben, bei welchem der besagte pH-Wert des Abwassers korrigiert wird durch Zugabe von säuerndem oder basisch machendem flüssigen Ammoniumhumat.

4. Ein Verfahren wie unter Patentanspruch 3 beschrieben, bei welchem das besagte Ammoniumhumat für jeden 2,0%- oder kleineren Anteil des Abwasser-Trockenmaterials in einer zwischen 0,5 und 0,75 Promille des Abwassergewichts entsprechenden Menge hinzugegeben wird.

5. Ein Verfahren wie unter Patentanspruch 1 beschrieben, bei welchem die besagte enzymische Substanz mindestens ein Enzym enthält.

6. Ein Verfahren wie unter Patentanspruch 5 beschrieben, bei welchem die besagte enzymische Substanz ein Gemisch von Enzymen darstellt, die ausgewählt werden unter: Amylase, Zellulase, Laktase, Lipase, Pankrease, Protease, Batalaktamase, Invertase.

7. Ein Verfahren wie unter Patentansprüchen 1, 5 oder 6 beschrieben, bei welchem die besagte enzymische Substanz mindestens einen Hilfs-Füllstoff enthält, der ausgewählt wird unter: Sojabohnenlezithin, Getreidemehl, Algen- oder Hefemehl, Dolomiten, Bentonit, Lavamaterialien und kalkigen Füllstoffen mit Magnesiumgehalt.

8. Ein Verfahren wie unter Patentanspruch 1 beschrieben, bei welchem für jeden 2,0%- oder kleineren Anteil des Abwasser-Trockenmaterials eine besagte enzymische Substanz in einer etwa 0,04 Promille des Abwassergewichts entsprechenden Menge hinzugegeben wird.

9. Ein Verfahren wie unter einem beliebigen der vorstehenden Patentansprüche beschrieben, gekennzeichnet durch den Umstand, daß während des besagten ersten und zweiten Sauerstoffanreicherungs-Schritts fünf bis zehn Liter Luft je Liter Abwasser unter Verrühren zugegeben werden und daß während des besagten letzten Enzym- und Sauerstoffanreicherungs-Schritts zehn bis 20 Liter Luft je Liter Abwasser unter

Verrühren zugegeben werden.

10. Ein Verfahren wie unter einem beliebigen der vorstehenden Patentansprüche beschrieben, bei welchem jeder Schritt für eine Zeitspanne ausgeführt wird, die zwischen fünf und 30 Stunden lang ist.

11. Ein Verfahren wie unter Patentanspruch 10 beschrieben, bei welchem das besagte Abwasser Ölivenölverarbeitungsbetrieben entstammt, gekennzeichnet durch den Umstand, daß der besagte erste und zweite Sauerstoffanreicherungs-Schritt für eine Gesamtzeitspanne von 24 Stunden ausgeführt werden und der besagte dritte Schritt für 24 Stunden.

12. Ein Verfahren wie unter Patentanspruch 1 beschrieben, bei welchem der besagte dritte Sauerstoffanreicherungs-Schritt unter Erhitzung des besagten organischen Abwassers ausgeführt wird.

**Revendications**

1. Un procédé pour l'élimination d'effluents organiques et liqueur noire d'installations de broyage d'olives, caractérisé par le fait qu'il comprend les phases suivantes: une première oxygénation à une valeur d'acidité de pH inférieure à 6,8, alimentant au moins 5 litres d'air par litre d'effluent; une seconde oxygénation du lit effluent à une condition substantiellement neutre avec une valeur de pH comprise entre 6,8 et 7,2 alimentant au moins 5 litres d'air par litre d'effluent et une troisième oxygénation en présence d'au moins une substance enzymatique alimentant au moins 5 litres d'air par litre d'effluent en condition de melange pour obtenir une substantielle humification des dits effluents.

2. Un procédé selon la revendication 1, dans lequel la dite valeur de pH des effluents est relevée et ajustée avant chaque phase d'oxygénation, à une valeur d'acidité pour la dite première phase et une valeur substantiellement neutre pour les dites seconde et troisième phases.

3. Un procédé selon le revendication 2 dans lequel le dite valeur de pH de l'effluent est ajustée en ajoutant du sel humique d'ammonium liquide acidifiant ou basifiant.

4. Un procédé selon la revendication 3, dans lequel est ajoutée une quantité du dit sel humique d'ammonium comprise entre 0,5 et 0,75 par mille du poids de l'effluent par 2.0%, ou sa fraction, de matière sèche d'effluent.

5. Un procédé selon la revendication 1, dans lequel la dite substance enzymatique est constituée d'au moins une enzyme.

6. Un procédé, selon la revendication 5, dans lequel la dite substance enzymatique est un mélange d'enzymes sélectionnées de: amylase, cellulase, lactase, lipase, pancréase, protéinase, bétalactamase, invertase.

7. Un procédé selon la revendication 1, 5 ou 6 dans lequel la dite substance enzymatique comprend au moins une charge de support sélectionnée parmi: lécithine de soya, farine de céréale, algues ou farines de levure, dolomites, bentonite, matières volcaniques et charges contenant magnesium calcaire.

8. Un procédé selon la revendication 1 dans lequel environ 0,04 pour mille du poids de l'effluent de la dite substance enzymatique est ajouté par 2,0% ou sa fraction, de matière sèche d'effluent.

9. Un procédé selon l'une quelconques des revendications précédente, caractérisé par l'alimentation de 5 à 10 litres d'air par litre d'effluent durant les dites première et seconde phases d'oxygénation, avec agitation, et alimentation de 10 à 20 litres d'air par litre d'effluent, avec melange, durant la dite dernière phase d'oxygénation enzymatique.

10. Un procédé selon l'une quelconque des revendications précédente dans lequel chaque phase est effectuée durant une période allant de 5 à 30 heures.

11. Un procédé selon la revendication 10, dans lequel les dits effluents proviennent d'industries de production d'huile d'olive, caractérisé par le fait que les dites première et seconde phases d'oxygénation ont une durée totale de 24 heures et que la dite troisième phase dure 24 heures.

12. Un procédé selon la revendication 1 dans lequel la dite troisième phase d'oxygénation est accompagnée du réchauffement des dits effluents organiques.